# EUROPEAN PATENT SPECIFICATION

(11) **EP 2 713 327 B1**
(45) Date of publication and mention of the grant of the patent: **25.10.2017**
(21) Application number: 13186715.2
(22) Date of filing: 30.09.2013
(51) Int. Cl.: G06Q 20/32, G06Q 20/40, G06Q 20/42

(54) **VALIDATING A TRANSACTION WITH A SECURE INPUT AND A NON-SECURE OUTPUT**
VALIDIERUNG EINER TRANSAKTION MIT EINEM SICHEREN EIN- UND EINEM UNSICHEREN AUSGANG
VALIDATION D'UNE TRANSACTION AVEC UNE ENTRÉE SÉCURISÉE ET UNE SORTIE NON SÉCURISÉE

(30) Priority: 01.10.2012 US 201213632907
(43) Date of publication of application: 02.04.2014
(73) Proprietor: NXP B.V., 5656 AG Eindhoven (NL)
(72) Inventor: Colnot, Vincent Cedric, 5656 AG Eindhoven (NL)
(74) Representative: Krott, Michel

(56) References cited:
- WO-A1-01/17310
- WO-A1-2007/129345
- WO-A1-2011/051757
- US-A1- 2008 209 212

## Description

Related application "Secure User Authentication using a Master Secure Element", Attorney Docket No. 81494882US01 filed on the same day and assigned to the same assignee is incorporated by reference herein in its entirety.

Related application "Validating a Transaction with a Secure Input without Requiring PIN Code Entry", Attorney Docket No. 81526126US01 filed on the same day and assigned to the same assignee is incorporated by reference herein in its entirety.

### BACKGROUND

Mobile platforms or connected devices such as smart phones, personal computers, and tablet PCs are integrating a secure element to authenticate the platform, to protect user credentials or to secure transactions. The secure element is typically a highly tamper resistant device that provides a secure execution environment isolated from the host processor. The secure element may be integrated into various form factors such as, for example, SIM cards, SD cards, or small outline packages attached directly on the printed circuit board (embedded secure element) and is especially useful for payment applications such as bank cards, mobile wallets and the like.

A payment transaction often requires the authentication of the user to either activate the application or to validate the transaction. A payment transaction is usually performed on a secure terminal with trusted user interfaces (i.e. secure display and keypad) for added security. In the typical mobile handset type architecture, a user enters their PIN code or activates the confirmation button located directly on the handset keypad. The entry of the PIN code or the activation of the confirmation button is typically handled by the host processor which operates in a non-secure and open environment. Because mobile handsets are typically connected to a network, the handsets can be infected by malware that can operate to intercept the entered PIN code or cause an invalid transaction to be confirmed.

Typical transaction validation involves two factors: 1) the application needs to be assured that only the user can validate the transaction; 2) the user needs to be assured that only the transaction the user accepts is completed. Typical solutions to the validation issue in current mobile handset architecture are typically software solutions that attempt to isolate the PIN code entry device and the display drivers showing the transaction from other processes running on the host processor. The various techniques of process isolation or virtualization create a secure environment that is typically not tamper resistant and also typically increases the complexity of the required software architecture. One example of such an approach is the TEE (Trusted Execution Environment) proposed by GlobalPlatform TEE White Paper, February 2011 and incorporated herein by reference in its entirety which states in part:

The TEE is a separate execution environment that runs alongside the Rich OS and provides security services to that rich environment. The TEE offers an execution space that provides a higher level of security than a Rich OS; though not as secure as a Secure Element (SE), the security offered by the TEE is sufficient for most applications. In this way, the TEE delivers a balance allowing for greater security than a Rich OS environment with considerably lower cost than an SE.

WO 2007/129345 A1 describes a process for confirming transactions by means of mobile units, wherein a control device sends a request message containing transaction data to a mobile unit, which can send to the control device a confirmation message containing a confirmation code, wherein the control device and/or the mobile unit are provided with one or more digital memories in which security applications are stored for encoding and digitally signing the request message and/or the confirmation message, respectively, before sending them. A system for carrying out said process is also described.

WO 01/17310 A1 describes methods and apparatus that apply GSM security principles to authenticate users who are requesting access to packet data networks in a communication system. The authentication process is triggered by an authenticating entity when it needs to verify the identity of a user trying to access certain resources, e.g., an application of a network. The authenticating entity sends an authentication request to an authentication server. The authentication server checks whether the user's identity corresponds to a known user. If so, the authentication server generates an authentication token that is sent to the user via an access network and a remote host. The authentication server uses a secure communication link, via a wireless network, to request the user to send the authentication token back to the authentication server via the secure communication link over a public land mobile network. Once the user sends the authentication token back to the authentication server via the secure channel, the authentication server compares the authentication token sent to the user and received from the user through the secure communication link. If the authentication tokens match, the authentication server instructs the authenticating entity to grant the user access to the requested services. If the authentication tokens do not match, the user will be denied access to the requested services.

WO 2011/051757 A1 describes a transactor for use in connection with transactions involving secure and non-secure information, which is configured to present notices on user interface screens associated with a non-secure operating mode so as to caution users not to enter secure information. When the transactor operates in a secure mode, no such notices are presented. In addition, when in the secure mode, the transactor may be configured to accept data inputs only from designated areas of a user interface, such as a touch screen.

US 2008/209212 A1 describes a handheld communications device created with a touch sensitive display, a secure computing component, and a non-secure computing component. The secure component may comprise a secure CPU executing a secure operating system. The non-secure component may comprise a separate non-secure CPU executing a separate non-secure operating system. The touch sensitive display on the handheld communications device is divided into a secure portion and a non-secure portion such that information displayed in the secure portion is provided by the secure operating system, and information displayed in the non-secure portion is provided by the non-secure operating system. Similarly, data entered through the secure portion of the display is provided to the secure operating system, and data entered through the non-secure portion of the display is provided to the non-secure operating system.

### BRIEF DESCRIPTION OF THE DRAWINGS

FIG. 1 shows an embodiment in accordance with the invention.
FIG. 2 shows an embodiment in accordance with the invention.
FIG. 3a shows two keypad layouts.
FIG. 3b shows a virtual keypad which supports letter input.
FIG. 3c shows a keypad mask on a polarizer layer in accordance with the invention.
FIG. 3d shows the layers of a virtual keypad in accordance with the invention.
FIG. 4a shows an embodiment in accordance with the invention.
FIG. 4b shows an embodiment in accordance with the invention.

### DETAILED DESCRIPTION

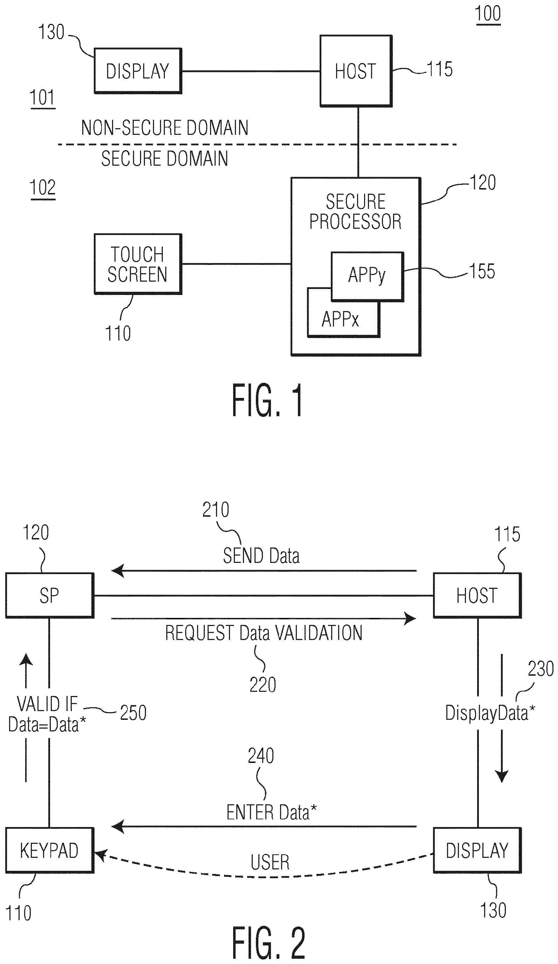

Related application "Secure User Authentication using a Master Secure Element", referenced above, describes an exemplary embodiment where master secure element 120 is used as a secure processor and controls user input into the handset keypad (or touch screen) 110 to secure the user authentication based on, for example, the entry of a PIN code (see FIG. 1). The basic idea is that transaction validation can be accomplished by a secure processor that controls the user input but not the output. Using a master secure element is one embodiment of secure processor 120. The TEE is essentially a virtual secure processor. Using the TEE as secure processor 120 as discussed above in place of a master secure element is typically a less secure embodiment but also an embodiment in accordance with the invention.

With reference to FIG.1 showing secure mobile phone architecture 100, it is apparent that Secure Processor (SP) 120 does not control non-secure display 130 which remains in non-secure domain 101 where it is controlled by host processor 115. Note that it is typically much more difficult to secure the display 130. Keypad 110, on the other hand, resides in secure domain 102 where it is controlled by SP 120. This raises the issue that the user cannot trust the transaction displayed even though application 155 is running securely in SP 120. In embodiments in accordance with the invention, SP 120 may be, for example, a master secure element or a TEE.

In embodiments in accordance with the invention, transactions may be secured on mobile handsets, PCs, tablets and similar devices equipped with a secure input and a non-secure output. When application 155 running on SP 120 validates a transaction, keypad 110 is fully controlled by SP 120. This allows the user to safely enter confidential data such as a PIN code that is directly transferred to application 155.

FIG. 2 shows an embodiment in accordance with the invention where the user closes the loop between the non-secure display 130 controlled by host 115 and keypad 110 controlled by SP 120. The user validates the transaction by entering on keypad 110 the data (e.g. the price of an item to be purchased). The transaction is validated because the user only enters the data that the user consents to enter and entry of the data is limited to the user. In step 210 of FIG. 2, host 115 sends "Data" related to the transaction to master secure element 120. In step 220, SP 120 requests data validation from host 115. This causes host 115 to display "Data*" on non-secure display 130 in step 230. In step 240, the user enters the "Data*" into keypad 110. In step 250, "Data*" entered by the user in step 240 is compared with "Data" sent by host 115 to SP 120 in step 210. If "Data" = "Data*" the transaction is validated and allowed to proceed.

For mobile handsets, PCs, tablets and similar devices where keypad 110 is physical (i.e. keypad 110 is not a touch screen keypad on non-secure display 130), a typical way to validate the transaction, in an embodiment in accordance with the invention, is to use the transaction amount such as the price of an item or service as "Data*" that is read by the user from display 130 and entered into keypad 110. The user determines if the transaction amount is correct; say the advertised price of an item. If the transaction amount "Data*" and the transaction amount "Data" transferred from host 115 to SP 120 do not match, the transaction is cancelled. Hence, if there is malware running on host processor 115 that is able to manipulate the transaction amount "Data" sent to SP 120, SP 120 will detect it in step 250. If there is malware running on host processor 115 that is able to alter the transaction amount "Data*" showing on display 130, the user will cancel the transaction.

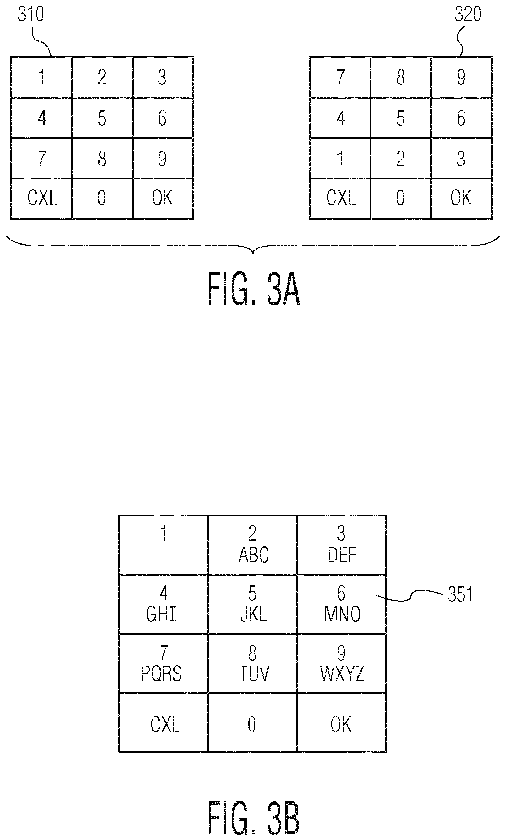

However, when a mobile handset, PC, tablet or similar device is equipped with a touch screen keypad (i.e. not a physical keypad) host processor 115 typically controls both display 130 and virtual keypad 110a which is projected onto display 130. Touch screen 135 overlays display 130 and is controlled by SP 120 when virtual keypad 110a is displayed. However, malware running on host processor 115 can control virtual keypad 110a and manipulate the layout of keypad 110a underneath touch screen 135. This can lead to the user entering an amount that is different from the one the user believes is being entered. For example, with reference to FIG. 3a, virtual keypad layout 310 is communicated to SP 120 while virtual keypad layout 320 is communicated to the user via display 130. Virtual keypad layout 310 is the layout for a typical cell phone keypad while virtual keypad layout 320 is the layout for the number pad for the typical computer keyboard. Then a transaction amount of $10 on display 130 as seen by the user communicates a transaction amount of $70 to SP 120.

In an embodiment in accordance with the invention, the integrity of keypad 110a may be verified to differentiate virtual keypad layout 310 from virtual keypad layout 320. The user enters, in addition to the transaction amount, secret data such as a PIN code having, for example at least four digits, that is shared between the user and SP 120. However, note that there is security vulnerability if the PIN code contains only the numbers "4", "5", "6" and "0" as the positions of those numbers do not change in going from keypad 310 to keypad 320. For a four digit PIN code, 2.56% of the available PIN codes would have this security vulnerability. Using PIN codes with more than four digits can also be used to reduce this security vulnerability. For example, a six digit PIN code, only 0.4% of the available PIN codes have this vulnerability.

The malware may also attack the integrity of virtual keypad layout 310 by just reversing the positions of cancel and validate, tricking the user into validating a transaction when the user wished to cancel it. This may be solved, for example, by having green and red markers or other indicators (for "OK" and "CXL", respectively) on the mobile handset case that are below the correct positions of the "OK" and "CXL" keys so that the user can detect when the positions have been switched.

FIG. 3b shows virtual keypad 351 which supports letters and allows a PIN code to be replaced by a password to improve the security. Using secret data such as a PIN code, birth date or password, for example, strengthens the transaction validation with user authentication. Using a PIN code, birth date or password for the transaction provides an integrity check for virtual keypad 351 with the use of a PIN code typically providing the weakest solution.

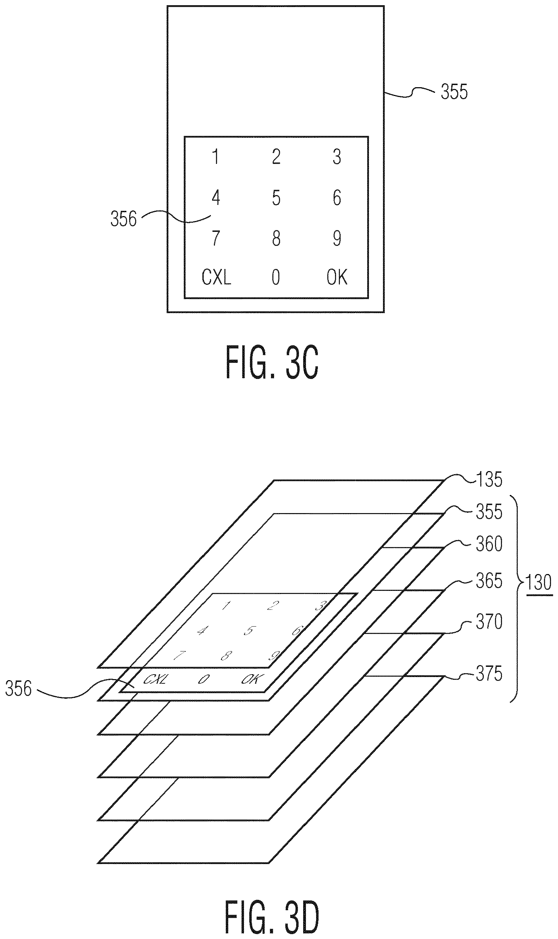

FIG. 3c shows an exemplary embodiment in accordance with the invention where keypad mask 356 has been added to polarized layer 355 underneath touch screen 135 as shown in FIG. 3d. Keypad mask layer 356 projects predefined keypad layout 310 onto touch screen 135 instead of virtual keypad layout 320 created on display 130 by host 115. Keypad mask 356 cannot be altered by host processor 115 as it is physically integrated into display 130 and provides a secure mapping to touch screen 135. This provides a secure solution to the possibility that host 115 manipulates non-secure display 130 and prevents the user from entering an amount that is different from the one the user believes is being entered.

In an embodiment in accordance with the invention, SP 120 drives two input lines of polarized layer 355 to activate keypad mask 356, one to control the background of predefined keypad layout 310. FIG. 3d shows the layers of display 130 and touch screen 135. Polarized layer 355 with keypad mask 356 is located between touch screen 135 and top glass 360. Liquid crystal layer 365 lies between top glass 360 and bottom glass 370. Below bottom glass 370 is backlight and polarizer layer 375.

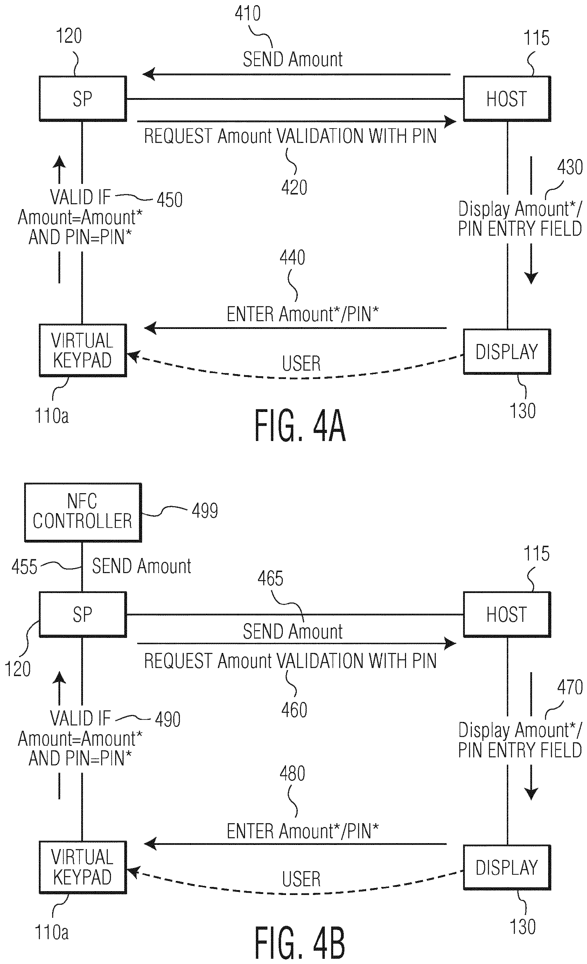

FIG. 4a shows an embodiment in accordance with the invention using both the transaction amount and the PIN code on a mobile handset, PC, tablet or similar device for transaction validation. The transaction is validated when the user enters both the agreed to transaction amount and the user's PIN code. Knowledge of the PIN code is restricted to the user and SP 120 and only the user can enter both the PIN code and the transaction amount. Hence, if the transaction amount entered by the user on keypad 110a and the transaction amount sent to SP 120 by host processor 115 are different, the transaction is cancelled by SP 120.

In step 410 of FIG. 4a, host 115 sends "Amount" related to the transaction to SP 120. In step 420, SP 120 requests amount validation with PIN code from host 115. This causes host 115 to display the amount and PIN entry fields on non-secure display 130 in step 430. In step 440, the user enters the "Amount*" and their "PIN*" into keypad 110a. Keypad 110a may be a virtual keypad generated by host 115 on display 130 or keypad layout 356 that is created by polarized mask layer 355 on touch screen 135. In step 450, "Amount*" entered by the user in step 440 is compared with "Amount" sent by host 115 to SP 120 in step 410 and "PIN*" entered by the user in step 440 is compared to "PIN" stored in the SP 120. If "Amount" = "Amount*" and "PIN" ="PIN*" the transaction is validated and allowed to proceed.

Note that for embodiments in accordance with the invention, it is not necessary for the transaction amount to originate from host processor 115. It may also come from another device directly connected to SP 120 such as a near field communications (NFC) controller 499 as shown in FIG. 4b if the mobile handset, PC, tablet or similar device is NFC enabled, for example. However, the transaction amount is still communicated to host processor 115 for validation by the user.

In step 455 of FIG. 4b, NFC controller 499 sends "Amount" related to the transaction to SP 120. In step 460, SP 120 requests amount validation with PIN code from host 115 and in step 465 sends "Amount" to host 115. This causes host 115 to display the amount and PIN entry fields on non-secure display 130 in step 470. In step 480, the user enters the "Amount*" and their "PIN*" into virtual keypad 110a. In step 490, "Amount*" entered by the user in step 480 is compared with "Amount" sent by NFC controller 499 to SP 120 in step 455 and "PIN*" entered by the user in step 480 is compared to "PIN" stored in the SP 120. If "Amount" = "Amount*" and "PIN" ="PIN*" the transaction is validated and allowed to proceed.

SP 120 in accordance with the invention requires a security indicator such as, for example, an LED to inform the user that the system is operating in secure mode and prevent phishing although any data intercepted by malware running on host processor 115 typically cannot be introduced into SP 120. SP 120 is designed such that user data can only be entered through keypad 110/110a.

Note that for embodiments in accordance with the invention, it is not necessary for the transaction amount data to originate from host processor 115. It may also come from another device directly connected to SP 120 such as a Near Field Communications (NFC) controller if the mobile handset, PC, tablet or similar device is NFC enabled, for example. However, the transaction amount is still communicated to host processor 115 for validation by the user. Also the PIN code need not be verified directly by SP 120. For online transactions, for example, the PIN code entered by the user may be encrypted by SP 120 and sent to a back end server for authentication. Transaction data such as amount, card number or expiration date may be either encrypted together with the PIN code or encrypted separately when communicated to the back end server.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

## Claims

1. A method for validating a transaction using a user device which comprises a host processor (115), a secure processor (120), a secure input controlled by said secure processor (120) and a non-secure output controlled by said host processor (115), the method comprising:
- sending data (210) from the host processor (115) to the secure processor (120);
- sending a request (220) for transaction validation from the secure processor (120) to the host processor (115) in response to receipt of the data by the secure processor (120);
- sending the data (230) from the host processor (115) to the non-secure output for display to a user;
- accepting a user input of the data and a user input of secret data into the secure input;
- retrieving (250), by the secure processor (120), the user input of the data and the user input of the secret data from the secure input; and
- determining, by the secure processor (120), if the data, received from the host-processor, and the user input of the data, received from the secure input, are equivalent and if the secret data entered is equal to the secret data stored in the secure processor to validate the transaction.

2. The method of claim 1 where the non-secure output is a display.

3. The method of claim 1 where the secure input is a touch screen overlying the display.

4. The method of claim 3 further comprising a keypad mask on the polarized layer interposed between the display and the touch screen.

5. The method of claim 1 where sending a request for transaction validation includes providing the first data to the host processor.

6. The method of claim 1 where the data is a transaction amount.

7. The method of claim 1 where the secure processor is a master secure element.

8. The method of claim 1 where the secure processor is a Trusted Execution Environment.

## Patentansprüche

1. Ein Verfahren zum Validieren einer Transaktion unter Verwendung einer Benutzervorrichtung, welche einen Host-Prozessor (115), einen sicheren Prozessor (120), einen sicheren Eingang, welcher mittels des sicheren Prozessors (120) gesteuert wird, und einen nicht sicheren Ausgang aufweist, welcher mittels des Host-Prozessors (115) gesteuert wird,
wobei das Verfahren aufweist:
- Senden von Daten (210) von dem Host-Prozessor (115) zu dem sicheren Prozessor (120);
- Senden einer Anfrage (220) für eine Transaktionsvalidierung von dem sicheren Prozessor (120) zu dem Host-Prozessor (115) als Reaktion auf einen Empfang der Daten mittels des sicheren Prozessors (120);
- Senden der Daten (230) von dem Host-Prozessor (115) zu dem nicht sicheren Ausgang zum Anzeigen bei einem Benutzer;
- Annehmen einer Benutzereingabe der Daten und einer Benutzereingabe von geheimen Daten in den sicheren Eingang;
- Abrufen (250), mittels des sicheren Prozessors (120), der Benutzer Eingabe der Daten und der Benutzereingabe der geheimen Daten von dem sicheren Eingang; und
- Bestimmen, mittels des sicheren Prozessors (120), ob die Daten, welche von dem Host-Prozessor empfangen werden, und die Benutzereingabe der Daten, welche von dem sicheren Eingang empfangen werden, äquivalent sind und ob die eingegebenen geheimen Daten gleich sind wie die geheimen Daten, welche in dem sicheren Prozessor gespeichert sind, zum Validieren der Transaktion.

2. Das Verfahren gemäß Anspruch 1, wobei der nicht sichere Ausgang ein Display ist.

3. Das Verfahren gemäß Anspruch 1, wobei der sichere Eingang ein Touchscreen ist, welcher über dem Display liegt.

4. Das Verfahren gemäß Anspruch 3, ferner aufweisend eine Tastatur Maske auf der polarisierten Schicht, welche zwischen dem Display und dem Touchscreen angeordnet ist.

5. Das Verfahren gemäß Anspruch 1, wobei das Senden einer Anfrage für eine Transaktionsvalidierung das Bereitstellen der ersten Daten zu dem Host-Prozessor enthält.

6. Das Verfahren gemäß Anspruch 1, wobei die Daten ein Transaktionsbetrag sind.

7. Das Verfahren gemäß Anspruch 1, wobei der sichere Prozessor ein Master sicheres Element ist.

8. Das Verfahren gemäß Anspruch 1, wobei der sichere Prozessor eine vertrauenswürdige Ausführungsumgebung ist.

## Revendications

1. Procédé de validation d'une transaction utilisant un dispositif utilisateur qui comprend un processeur hôte (115), un processeur sécurisé (120), une entrée sécurisée contrôlée par ledit processeur sécurisé (120), ainsi qu'une sortie non sécurisée contrôlée par ledit processeur hôte (115), le procédé comprenant :
- l'envoi de données (210) depuis le processeur hôte (115) jusqu'au processeur sécurisé (120),
- l'envoi d'une demande (220) en vue d'une validation de transaction depuis le processeur sécurisé (120) jusqu'au processeur hôte (115) en réponse à la réception des données par le processeur sécurisé (120),
- l'envoi des données (230) depuis le processeur hôte (115) vers la sortie non sécurisée en vue d'un affichage à l'utilisateur,
- l'acceptation d'une saisie utilisateur des données et d'une saisie utilisateur de données secrètes dans l'entrée sécurisée,
- la récupération (250), par le processeur sécurisé (120), de la saisie utilisateur des données et de la saisie utilisateur des données secrètes provenant de l'entrée sécurisée, et
- la détermination, par le processeur sécurisé (120), de ce que les données reçues en provenance du processeur hôte et la saisie utilisateur des données, reçue en provenance de l'entrée sécurisée, sont équivalentes et si les données secrètes entrées sont égales aux données secrètes mémorisées dans le processeur sécurisé afin de valider la transaction.

2. Procédé selon la revendication 1, dans lequel la sortie non sécurisée est un afficheur.

3. Procédé selon la revendication 1, dans lequel l'entrée sécurisée est un écran tactile superposé à l'afficheur.

4. Procédé selon la revendication 1, comprenant en outre un masque de clavier sur la couche polarisée intercalée entre l'afficheur et l'écran tactile.

5. Procédé selon la revendication 1, dans lequel l'envoi d'une demande de validation de transaction inclut la fourniture des premières données au processeur hôte.

6. Procédé selon la revendication 1, dans lequel les données sont une valeur de transaction.

7. Procédé selon la revendication 1, dans lequel le processeur sécurisé est un élément sécurisé maître.

8. Procédé selon la revendication 1, dans lequel le processeur sécurisé est un environnement d'exécution de confiance.
